# EUROPEAN PATENT APPLICATION

(11) **EP 4 091 753 A1**
(43) Date of publication of application: **23.11.2022**
(21) Application number: 22170745.8
(22) Date of filing: 29.04.2022
(51) Int. Cl.: B23K 9/095, B23K 9/10

(54) **SYSTEMS AND METHODS FOR CONTROL OF PRIMARY INPUT CURRENT IN A WELDING PROGRAM**

(30) Priority: 30.04.2021 US 202163182389 P; 28.04.2022 US 202217731334
(71) Applicant: Illinois Tool Works, Inc., Glenview, Illinois 60025 (US)
(72) Inventor: MANTHE, Alan Adam, Glenview, 60025 (US); BROCK, Maxwell Bode, Glenview, 60025 (US); ERDMANN, Jeremy John, Glenview, 60025 (US)
(74) Representative: HGF

(57) **Abstract**

Disclosed example welding power systems and methods monitor supply power inputs from a primary power source (108). The supply power is compared to current and/or power threshold values corresponding to limits associated with the primary power source. If the supply power exceeds a threshold value associated with the limits, the welding power system controls welding parameters or devices to adjust a supply power demand, thereby ensuring the draw on supply power does not exceed the capabilities of the power source. In some examples, the disclosed welding power system (102) presents a subset of welding parameters identified as available for operation based on the capabilities of the power source. The user interface (114) displays only the subset of available welding parameters to an operator for selection, thereby ensuring the draw on supply power does not exceed the capabilities of the power source.

## Description

### CROSS-REFERENCE TO RELATED APPLICATIONS

This application hereby claims priority to and the benefit of U.S. Provisional Application Ser. No. 63/182,389, entitled "Systems And Methods For Control Of Primary Input Current In A Welding Program," filed April 30, 2021. U.S. Provisional Application Ser. No. 63/182,389 is hereby incorporated by reference in its entireties for all purposes.

### BACKGROUND

A common metal welding technique employs the heat generated by electrical arcing to transition a work piece to a molten state, to facilitate a welding process. Traditionally, during a welding operation, an operator selects the level and types of resources provided to the welding devices depending on the particulars of the weld and the materials being welded.

Conventionally, welding devices rely on the knowledge and acumen of the operator to select the most appropriate power settings for a welding operation, based on considerations such as the wire electrode being used, the type of workpiece, the type of welding torch, etc. Unfortunately, in many cases, the weld operator does not have information regarding the capabilities or limitations of the power source. If the operator settings result in power demand from the power source exceeding the input limitations, the power source and/or welding equipment may respond by, for example, throttling power or tripping a breaker, which may negatively impact the power source, the welding equipment, or the weld itself.

Limitations and disadvantages of conventional and traditional approaches will become apparent to one of skill in the art, through comparison of such systems with the present disclosure as set forth in the remainder of the present application with reference to the drawings.

### SUMMARY

Welding power systems and user interfaces for welding power systems to control primary input current or power from a power source in a welding program are disclosed, substantially as illustrated by and described in connection with at least one of the figures, as set forth more completely in the claims.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic diagram of an example welding system including a power supply having a user interface to configure a welding process, in accordance with aspects of this disclosure.
FIG. 2 provides a flowchart representative of example machine-readable instructions that may be executed by the example system of FIG. 1 to implement dynamic primary input current or power control in a welding program, in accordance with aspects of this disclosure.
FIGS. 3A-3C provide a flowchart representative of example machine-readable instructions that may be executed by the example system of FIG. 1 to implement a predeterministic primary input current or power control in a welding program, in accordance with aspects of this disclosure.

The figures are not necessarily to scale. Where appropriate, similar or identical reference numbers are used to refer to similar or identical components.

### DETAILED DESCRIPTION

Disclosed are example welding power systems and methods to allow for control of primary input current or power in a welding program.

Welding power systems can be configured to draw power from a variety of power sources. Often, the welding power system (e.g., a welding power supply) draws or attempts to draw more input current or power than the power source is capable of delivering. If the increased input draw is allowed, the welding power system may trigger a response from the power source. For example, in response to a demand for power exceeding a predetermined supply power limit, a circuit breaker may trip, the power source may throttle the power to the welding power system, or an attached engine generator may overload, as a list of non-limiting examples. If this situation occurs, conventional systems are configured to, for example, decrease the output settings of the welding power source with the hope that the power draw from the power source (e.g., primary circuit) is within the capabilities of the power source.

The disclosed welding power system is configured to monitor, measure, and/or calculate supply power inputs (and/or one or more components of the supply power input) from a power source. The supply power and/or supply power components (e.g., power, current, voltage, an RMS content of the supply current, etc.), can be compared to one or more values and/or range of values (e.g., one or more current and/or power threshold values) corresponding to a breaker size, a generator output, or a power source output rating, as a list of non-limiting examples.

In some examples, the disclosed welding power system can be implemented as a dynamic process, such that the supply current and/or power is monitored constantly, periodically, and/or in response to a command. If the supply power and/or supply power component(s) exceed a desired value and/or or violate an inclusive or exclusive range of values, the welding power system may control one or more welding parameters (e.g., a power output level, a current output level, a voltage output level, a power input level, a current input level, a voltage input level etc.) or devices (e.g., a wire feeder, welding torch, etc.) to adjust (e.g., decrease) a supply power demand, thereby ensuring the draw on supply power does not exceed the capabilities of the power source.

In some examples, the disclosed welding power system can be implemented as a predeterministic process, such that the supply current and/or power levels are predetermined (e.g., provided as an input, based on a listed power rating from a given source, etc.). In response, the welding power system is configured to identify welding parameter limits (e.g., power output levels, current output levels, voltage output levels, etc.) within the capabilities of the power source (e.g., determined based on the predetermined supply current and/or power levels). Based on the identification, a subset of welding parameters will be presented as available for operation. In some examples, the user interface may display only the subset of available welding parameters (and/or welding processes and/or devices associated with the subset) to an operator for selection, thereby ensuring the draw on supply power does not exceed the capabilities of the power source. In some examples, the user interface may prevent the display of text or icons corresponding to the subset of welding parameters that are not available at the adjusted output power. Preventing the display of the text or icons may include de-illuminating an icon, changing a color of the text or icons to indicate related features are unavailable (e.g., greying out, turn to red, etc.). In some examples, switches, buttons, and/or other selection devices are similarly made unavailable and/or deactivated to reflect the available welding parameters.

By preventing the welding system from outputting power sufficient to allow a supply power draw to exceed a predetermined limit, the system's components (e.g., a primary switch, input rectifier, etc.) can be protected. Thus, once the system has detected the input current and/or power at the predetermined limit, the system can automatically reduce the output power being delivered so that the primary current or power does not go above this predetermined limit. For example, the input current limit can be monitored as an adjustable software setpoint and be compared to an analog input signal whose RMS content can be calculated.

Advantageously, with the welding power system having the capability to dynamically limit the input current to a preset level, the input value limits (e.g., setpoint) can be adjusted to any level. Accordingly, the system is able to protect the welding system components and/or the connected electrical service, such as by preventing a circuit breaker from tripping or by preventing an overload of an engine generator.

In disclosed examples, a welding power system includes an interface to receive an input corresponding to one or more supply power levels. An input circuit to monitor supply current or supply power from one or more supply power sources. Power conversion circuitry to condition the supply current or the supply power to output power for one or more welding devices. Control circuitry is configured to receive a measurement of the supply current or the supply power from the input circuit; determine a magnitude of the supply current or the supply power; compare the supply current magnitude or the supply power magnitude to a predetermined threshold current magnitude or a predetermined threshold power magnitude based in part on the one or more supply power levels; and control the power conversion circuitry to adjust the output power to the one or more welding devices in response to an output power demand from the one or more welding devices causing the supply current magnitude or the supply power magnitude to exceed the predetermined threshold current or power magnitude.

In some examples, the supply current magnitude or the supply power magnitude are one of a discrete current or power value or a range of current or power values. In some examples, the control circuitry is further configured to determine the predetermined threshold current magnitude or predetermined threshold power magnitude based at least in part on a rated power level of the supply power.

In some examples, the one or more supply power levels comprise one or more of a supply power magnitude, a supply current magnitude, a range of supply power magnitudes, or a range of supply current magnitudes. In some examples, one or more supply power levels are one or more of a breaker size, a generator output, or a power source output rating. In some examples, the control circuitry is further configured to determine the predetermined threshold current or the predetermined threshold power magnitudes as a percentage above or below the one or more supply power levels, or a magnitude above or below the one or more supply power levels.

In some examples, the interface provides an indication of the supply current magnitude or the supply power magnitude at a moment that the supply current magnitude or the supply power magnitude exceeds the predetermined threshold current or power magnitude. In some examples, the interface is one or more of a user interface or a communications interface circuit.

In some examples, the control circuitry is further configured to control an alert indicating the output power is adjusted in response to exceeding the predetermined threshold current magnitude or the predetermined threshold power magnitude.

In some disclosed examples, a welding power system includes an interface to receive an input corresponding to one or more supply power levels. Power conversion circuitry conditions supply power from one or more power supply sources to provide output power for one or more welding devices. And control circuitry is configured to compare the one or more supply power levels to a plurality of predetermined threshold current magnitudes or a plurality of predetermined threshold power magnitudes, wherein the magnitudes correspond to an input power level or an output power level associated with one or more welding parameters; determine a subset of welding parameters of the one or more welding parameters capable of achieving an output power level at or below the one or more supply power levels; control the interface to present the subset of welding parameters; and control the power conversion circuitry to adjust the output power to one or more welding devices based on the output power level associated with the subset of welding parameters.

In some examples, the interface is a graphical user interface configured to display one or more of text or icons corresponding to the subset of welding parameters or one or more welding processes available at the adjusted output power. In some examples, the interface is a graphical user interface configured to prevent display of one or more of text or icons corresponding to the subset of welding parameters or one or more welding processes that are not available at the adjusted output power.

In some examples, the interface is further to receive a selection of a first welding parameter of the subset of welding parameter, the control circuitry further configured to receive power component data corresponding the selected first welding parameter; and control the power conversion circuitry to adjust a power component for the one or more welding devices based on the data.

In some examples, the interface is further to receive a selection of a second welding parameter of the subset of welding parameters, the control circuitry further configured to receive wire feed speed data corresponding the selected second welding parameter; and control a wire feeder of the one or more welding devices to adjust wire feed speed based on the wire feed speed data.

In some examples, a memory device is configured to store one or more of the plurality of predetermined threshold current magnitudes, the plurality of predetermined threshold power magnitudes, one or more welding processes, or a combination thereof.

In some examples, the control circuitry is further configured to receive data corresponding to one or more components of the supply power, the output power provided to the one or more welding devices, or a combination thereof during a given welding operation; and store the one or more components in the memory device.

In examples, the control circuitry is further configured to receive data corresponding to one or more components of the supply power, the output power provided to the one or more welding devices, or a combination thereof during another welding operation; compare the one or more supply power components received during the other welding operation with the one or more stored supply power components; and control the power conversion circuitry to provide output power during the other welding operation based on the one or more stored supply power components in response to a match.

In some examples, the one or more welding processes comprises one or more of a welding-type, a welding operation, a welding material, a welding tool, or a combination thereof. In some examples, the supply power is provided by a power source including one or more of mains power, a generator, or an energy storage device. In some examples, an input circuit is configured to monitor supply current from one or more supply power sources. In some examples, the one or more welding parameters comprises one or more of current, voltage, power, wire feed speed, or a combination thereof.

As used herein, the terms "welding-type system" and/or "welding system," includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith.

As used herein, the terms "welding-type power" and/or "welding power" refer to power suitable for welding, plasma cutting, induction heating, CAC-A and/or hot wire welding/preheating (including laser welding and laser cladding). As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, "power conversion circuitry" and/or "power conversion circuits" refer to circuitry and/or electrical components that convert electrical power from one or more first forms (e.g., power output by a generator) to one or more second forms having any combination of voltage, current, frequency, and/or response characteristics. The power conversion circuitry may include safety circuitry, output selection circuitry, measurement and/or control circuitry, and/or any other circuits to provide appropriate features.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit," "control circuitry," and/or "controller," as used herein, may include digital and/or analog circuitry, discrete and/or integrated circuitry, microprocessors, digital signal processors (DSPs), and/or other logic circuitry, and/or associated software, hardware, and/or firmware. Control circuits or control circuitry may be located on one or more circuit boards that form part or all of a controller, and are used to control a welding process, a device such as a power source or wire feeder, and/or any other type of welding-related system.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory device.

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magnetooptical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory can be configured to store code, instructions, applications, software, firmware and/or data, and may be external, internal, or both with respect to the processor 120.

As used herein, the term "torch," "welding torch," "welding tool" or "welding-type tool" refers to a device configured to be manipulated to perform a welding-related task, and can include a hand-held welding torch, robotic welding torch, gun, or other device used to create the welding arc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW), shielded metal arc welding (SMAW), spray, short circuit, and/or any other type of welding process.

As used herein, the term "welding program" includes at least a set of welding parameters for controlling a weld. A welding program may further include other software, algorithms, processes, or other logic to control one or more welding-type devices to perform a weld.

As used herein, the terms "first" and "second" may be used to enumerate different components or elements of the same type, and do not necessarily imply any particular order.

As used herein, the terms "coupled," "coupled to," and "coupled with," each mean a structural and/or electrical connection, whether attached, affixed, connected, joined, fastened, linked, and/or otherwise secured. As used herein, the term "attach" means to affix, couple, connect, join, fasten, link, and/or otherwise secure. As used herein, the term "connect" means to attach, affix, couple, join, fasten, link, and/or otherwise secure.

As used herein, the terms "welding parameter" includes one or more of voltage, current, power, wire feed speed, gas flow rate, pulse rate, workpiece thickness, workpiece material type, electrode type, welding process, travel speed, arc length, or joint type, as a list of non-limiting examples.

The term "power" is used throughout this specification for convenience, but also includes related measures such as energy, current, voltage, resistance, conductance, and enthalpy. For example, controlling "power" may involve controlling voltage, current, energy, resistance, conductance, and/or enthalpy, and/or controlling based on "power" may involve controlling based on voltage, current, energy, resistance, conductance, and/or enthalpy.

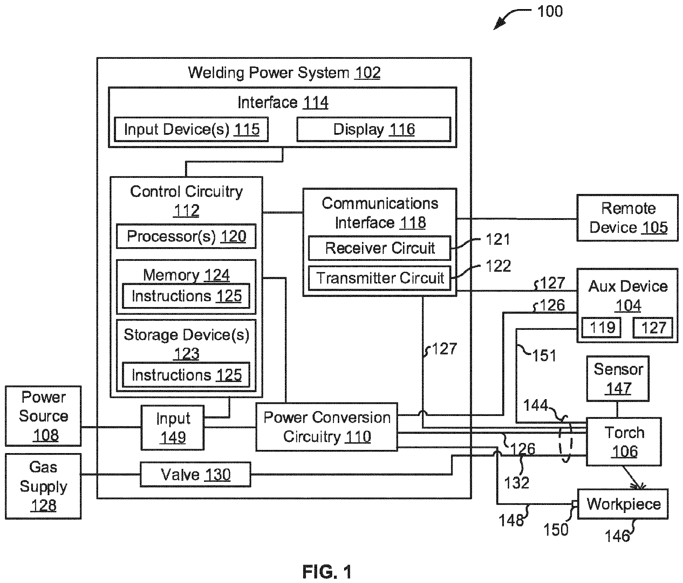

Turning now to the drawings, FIG. 1 is a block diagram of an example welding system 100 having a welding-type power supply or power system 102, an auxiliary device, such as a wire feeder, 104, and a welding torch 106. The welding system 100 powers, controls, and supplies consumables to a welding application for simple and intuitive setup for configurable and/or default settings for the power system 102 and/or wire feeder 104. For example, an interface 114 can be provided to allow an operator to view, select, and/or adjust one or more welding parameters, procedures, or welding parameter values, as a list of non-limiting examples. One or more input devices 115 (such as a selector switch, knob, touchscreen input) are configured to receive an input from the operator relating to a desired change in a value of the one or more welding parameters.

In some examples, the power system 102 directly supplies input power to the welding torch 106. The welding torch 106 may be a torch configured for shielded metal arc welding (SMAW, or stick welding), tungsten inert gas (TIG) welding, gas metal arc welding (GMAW), flux cored arc welding (FCAW), based on the desired welding application. In the illustrated example, the power system 102 is configured to supply power to the wire feeder 104, and the wire feeder 104 may be configured to route the input power to the welding torch 106. In addition to supplying an input power, the wire feeder 104 may supply a filler metal to a welding torch 106 for various welding applications (e.g., GMAW welding, flux core arc welding (FCAW)). While the example system 100 of FIG. 1 includes a wire feeder 104 (e.g., for GMAW or FCAW welding), the wire feeder 104 may be replaced by any other type of remote accessory device 105, such as a stick welding and/or TIG welding remote control interface that provides stick and/or TIG welding. In some examples, the auxiliary device 104 is an air compressor, hydraulic pump, battery charger, etc.

The power system 102 receives primary power from a power source 108 (e.g., mains from the AC power grid, an engine/generator set, a battery, or other energy generating or storage devices, or a combination thereof), conditions the primary power, and provides an output power to one or more welding devices in accordance with demands of the system 100. The primary power source 108 may be supplied from an offsite location (e.g., the primary power may originate from the power grid). The power system 102 includes power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power source 108) to welding-type power based on a weld current/voltage/power setpoint and outputs the welding-type power via a weld circuit.

In some examples, the power conversion circuitry 110 is configured to convert the primary power source 108 to both welding-type power and auxiliary power outputs. In some examples, the power system 102 receives a converted auxiliary power output directly from a wall outlet. Any suitable power conversion system or mechanism may be employed by the power system 102 to generate and supply both weld and auxiliary power.

The power system 102 includes a control circuitry 112 to control the operation of the power system 102. For example, the control circuitry 112 receives input from the user interface 114, through which a user may choose a process, welding parameter type (e.g., voltage, current, power, wire feed speed, gas flow rate, pulse rate, workpiece thickness, workpiece material type, electrode type, welding process, travel speed, arc length, joint type, particular pulsed or non-pulsed welding regimes, and so forth), and/or input desired parameter values. The user interface 114 may receive inputs using the one or more input devices 115, such as via a keypad, keyboard, physical buttons, knob, a touch screen (e.g., software buttons), a voice activation system, a wireless device, etc. Furthermore, the control circuitry 112 controls operating parameters (e.g., welding parameters) based on input by the user as well as based on other current operating parameters.

The user interface 114 may include a display 116 for presenting, showing, or indicating, information to an operator, such as displayed for selection, adjustment, etc. The control circuitry 112 may also include interface circuitry for communicating data to other devices in the system 100, such as the wire feeder or other auxiliary device 104, the welding torch 106, etc. For example, in some situations, the power system 102 wirelessly communicates with other welding devices within the welding system 100. Further, in some situations, the power system 102 communicates with other welding devices using a wired connection, such as by using a network interface controller (NIC) to communicate data via a network (e.g., ETHERNET, 10baseT, 10base100, etc.). In the example of FIG. 1, the control circuitry 112 communicates with the wire feeder 104 via the weld circuit via a communications interface or transceiver 118, as described below. In some examples, information corresponding to limitations of one or more connected device and/or power source is communicated to the system 100. For instance, a component and/or power source may send a data signal indicating power and/or functional limitation, which may be presented to the user via display 116. In some examples, a bar code, serial number, quick response (QR) code, or other suitable indication can be provided on the component, which can be read and/or accessed by the system 100 to automatically incorporate such data into the determination of available resources and/or functions.

The control circuitry 112 includes at least one controller or processor 120 that controls the operations of the power system 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation. One or more lists or look up tables (e.g., correlating welding parameters and/or processes to supply power/current levels) may be provided in the memory device 124 and/or the storage device(s) 123, and/or via network connections to various databases available to inform decision-making, such as to access preferred welding parameters, to store updated welding parameter settings, etc.

An input circuit 149 can be arranged to monitor supply power and/or components of the supply power. The input circuit 149 can include one or more sensors, switches, or other devices configured to monitor, measure, calculate, and/or otherwise identify and/or determine a level, magnitude, and/or component of the supply power. Data corresponding to the supply power can be provided from the input circuit 149 to one or more circuits within the welding system 100 (e.g., control circuitry, power conversion circuitry, etc.).

In order to measure the supply current or power, the input circuit 149 can be configured to sample the current (or other component of the supply power) in real-time, in order to calculate or otherwise determine the RMS content of the supply power (e.g., via a Newtonian Method calculation). Additionally or alternatively, software and/or firmware, including an ASIC, can be configured to perform calculations "off-line" such that the control circuitry 112 can poll the input circuit 149 to update the immediate RMS value. In some examples, real-time samples of the supply power can be averaged and a gain factor applied to convert the average content to an RMS value. This method can be effective if the supply current is input as a nearly sinusoidal waveform with little or no harmonic content.

In some examples, the welding power flows from the power conversion circuitry 110 through one or more weld cables 126 to the wire feeder 104 and the welding torch 106. The example weld cable 126 is attachable and detachable from weld studs at each of the power system 102 and the wire feeder 104 (e.g., to enable ease of replacement of the weld cable 126 in case of wear or damage). Furthermore, in some examples, welding data is provided with the weld cable 126 such that welding power and weld data are provided and transmitted together over the weld cable 126. The communications interface 118 can be communicatively coupled to one or more cables 127 to communicate (e.g., send/receive) data over the weld cable 127. The communications interface 118 may be implemented using serial communications (e.g., full-duplex RS-232 or RS-422, or half-duplex RS-485), network communications (e.g., Ethernet, PROFIBUS, IEEE 802. IX wireless communications, etc.), parallel communications, and/or any other type of communications techniques. In some examples, the communications interface 118 may implement communications over the weld cable 127.

The example communications interface 118 includes a receiver circuit 121 and a transmitter circuit 122, and/or a transceiver circuit. Generally, the receiver circuit 121 receives data transmitted by the wire feeder 104 and/or the welding torch 106 via the weld cable 126 and the transmitter circuit 122 transmits data to the wire feeder 104 and/or the welding torch 106 via the weld cable 126. The communications interface 118 enables remote configuration of the power system 102 from the location of the wire feeder 104 and/or the welding torch 106, and/or command and/or control of the wire feed speed output by the wire feeder 104 and/or the weld power (e.g., voltage, current) output by the power system 102.

The example wire feeder 104 and/or the welding torch 106 may also include a communications transceiver, which may be similar or identical in construction and/or function as the communications interface 118. While communication over a separate communications cable is illustrated in FIG. 1, other communication media, such as wireless media, power line communications, and/or any other communications media, may be used.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a cable or hose 132 (which in some implementations may be packaged with the welding power output) to the wire feeder 104, which provides the shielding gas to the welding application. In some examples, the welding system 100 does not include the gas supply 128, the valve 130, and/or the hose 132.

In some examples, the wire feeder 104 uses the welding power to power the various components in the wire feeder 104, such as to power a wire feeder controller within the wire feeder 104. As noted above, the weld cable 126 may be configured to provide or supply the welding power. The power system 102 may also communicate with a communications transceiver 119 of the wire feeder 104 using the weld cable 126 and the communications interface 118 disposed within the power system 102. In some examples, the communications transceiver 119 is substantially similar to the communications interface 118 of the power system 102. The wire feeder controller controls the operations of the wire feeder 104. In some examples, the wire feeder 104 uses the wire feeder controller to detect whether the wire feeder 104 is in communication with the power system 102 and to detect a current welding process of the power system 102 if the wire feeder 104 is in communication with the power system 102.

The wire feeder 104 includes components such as a wire drive and/or drive rollers, with the wire feeder configured to receive control signals from the wire feeder controller to activate the wire drive and/or drive rollers. The drive rollers rotate to pull electrode wire 151 off a spool of wire. The wire 151 is provided to the welding application through cable 144. Likewise, the wire feeder 104 may provide the shielding gas from the hose 132 through the cable 144. The electrode wire 151, the shield gas, communications via cable 127, and the power from the weld cable 126 are bundled together in the single cable 144 and/or individually provided to the welding torch 106. In some examples, the power is initiated and stopped by the power system 102. In some examples, one or more sensors 147 are included with or connected to in the wire feeder 104 to monitor one or more welding parameters (e.g., power, voltage, current, wire feed speed, etc.) to inform the controller during the welding process. In some examples, one or more sensors are included in the welding power system 102 and/or the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power system 102 (e.g., to the power conversion circuitry 110) to provide a return path for the weld current (e.g., as part of the weld circuit). The example work cable 148 is attachable and/or detachable from the power system 102 for ease of replacement of the work cable 148. The work cable 148 may be terminated with a clamp 150 (or another power connecting device), which couples the power system 102 to the workpiece 146.

In some examples, one or more sensors 147 are included with or connected to the welding torch 106 to monitor one or more welding parameters (e.g., power, voltage, current, wire feed speed, etc.) to inform the controller 112 during the welding process.

Although FIG. 1 is illustrated as having a user interface (114) incorporated with a particular system, the illustration is exemplary such that one or more of the interfaces disclosed herein as well as additional user interfaces may be incorporated in one or more of the example welding systems disclosed herein. Furthermore, although power system 102 and wire feeder 104 are illustrated as independent units, in some examples, the power supply and wire feeder can be housed in a single enclosure or otherwise integrated. Additionally or alternatively, a single controller, control circuitry, and/or interface can control operation of both the power supply and wire feeder, in some examples.

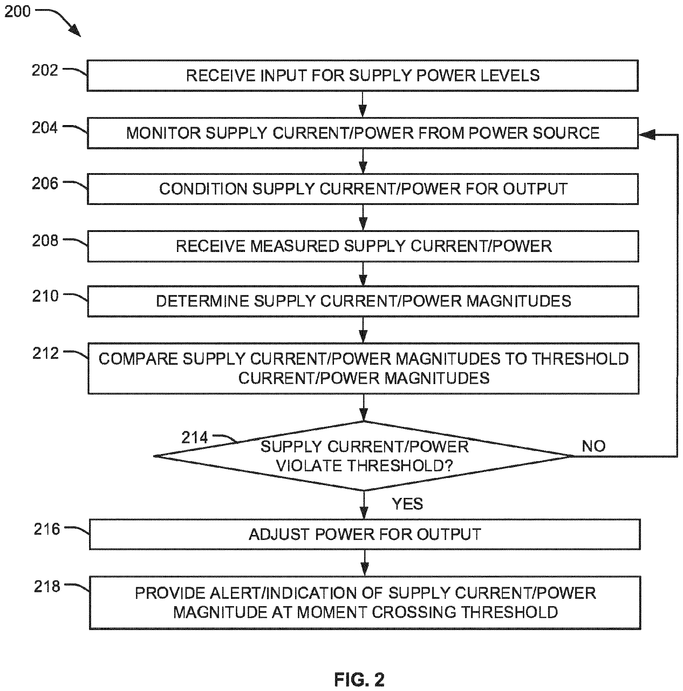

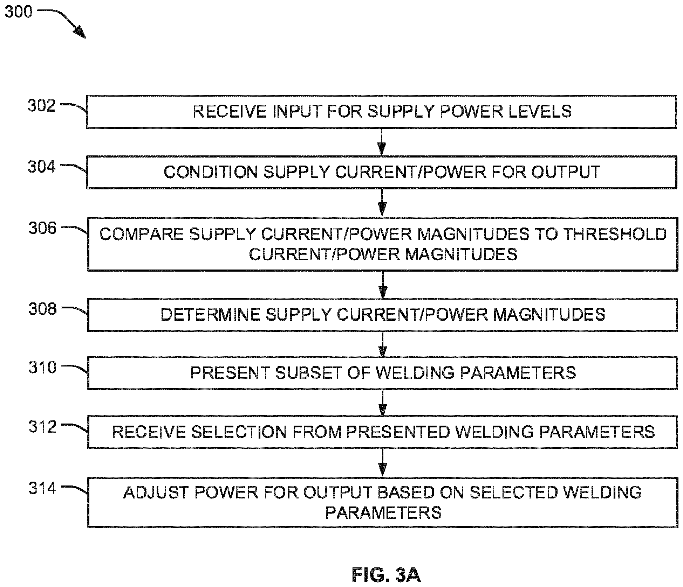

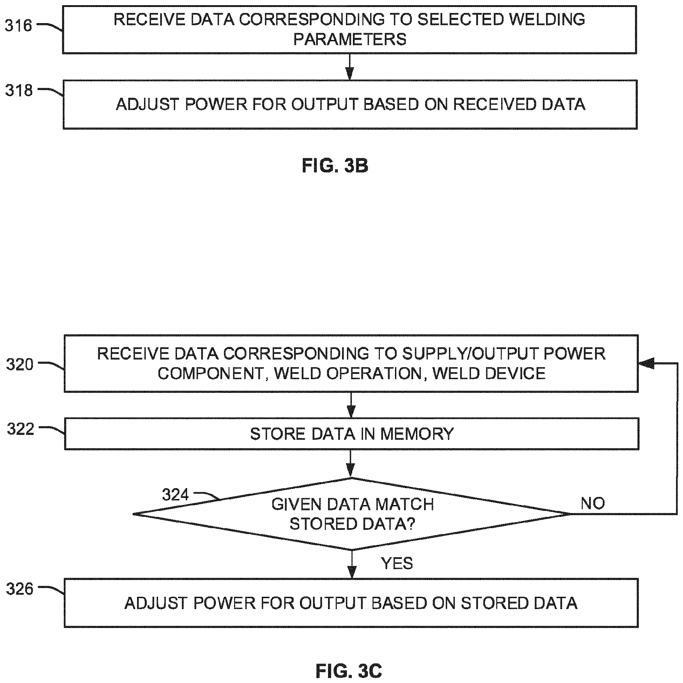

FIGS. 2-3C provide a flowchart representative of example machine readable instructions 200 and 300 which may be executed by the example welding system 100 of FIG. 1. The example instructions 200 and 300 may be stored in the storage device(s) 123 and/or the memory 124 and executed by the processor(s) 120 of the control circuitry 112. Further, as provided in the flowchart, blocks 202 to block 218 provided in FIG. 2 represent a dynamic setting, whereas blocks 302 to block 326 provided in FIGS. 3A-3C represent a predeterministic setting, in accordance with disclosed examples.

As shown in In block 202 of FIG. 2, the welding power system receives an input corresponding to one or more supply power levels (e.g., a breaker size, a generator output, a power source output rating, etc.) via an interface (e.g., interface 114). For example, the supply power levels may correspond to discrete magnitudes, values, and/or a range of values, as a percentage above or below the one or more supply power levels, or a magnitude above or below the one or more supply power levels. The values, ranges, percentages, and/or magnitudes may be presented to the user via a simple selection tool (e.g., via interface 114, input device 115, display 116, etc.), such as a high, medium, or low ranges (about the desired supply power level), identified as text, numerically, graphically, as a range of colors, etc., to facilitate ease of selection.

In block 204, an input circuit (e.g., input circuit 149) monitors supply current or supply power from one or more supply power sources (e.g., primary power source 108). In block 206, power conversion circuitry (e.g., power conversion circuitry 110) conditions the supply current or the supply power to output power for one or more welding devices (e.g., wire feeder/auxiliary device 104, welding torch 106).

In block 208, control circuitry (e.g., control circuitry 112) receives a measurement of the supply current or the supply power from the input circuit. In block 210, the control circuitry determines/calculates a magnitude of the supply current or the supply power based on the measurement. In block 212, the control circuitry compares the supply current magnitude or the supply power magnitude to a predetermined threshold current magnitude or a predetermined threshold power magnitude, the thresholds being based at least in part on the one or more supply power levels. For example, the threshold magnitudes can be discrete values or a range of values for the supply current or power, which can be stored in a storage device and/or memory (e.g., in storage device(s) 123 and/or the memory 124).

In block 214, the control circuitry determines whether the supply current magnitude or the supply power magnitude has violated (e.g., crossed, exceeded, etc.) the predetermined threshold current or power magnitudes. If the magnitudes have not violated a threshold magnitude, the method returns to block 204 to continue to monitor the supply current or power. If the magnitudes have violated one or more threshold magnitudes, the method proceeds to block 216, where the control circuitry controls the power conversion circuitry to adjust the output power to the one or more welding devices. For example, when an output power demand (e.g., request for a power draw from the primary power source 108) from a welding device causes the supply current or power magnitude to exceed the predetermined threshold current or power magnitudes, the control circuitry can cause the power output to decrease, thereby limiting the power draw.

In some additional or alternative examples, if a supply current or power magnitude violates one or more threshold magnitudes, the interface can provide an indication of the supply current magnitude or the supply power magnitude at a moment that the supply current magnitude or the supply power magnitude approached and/or exceeded the predetermined threshold, in block 218. For example, the interface may display a value of the magnitude, as well as the input supply power levels or other information associated with welding system operation, at the given moment.

For example, the control circuitry may identify one or more operating parameters of the welding system at the time, such as the welding process-type in progress, a welding operation, a welding material, the tools and/or devices in operation, the supply and/or output power levels (and components thereof), or a combination thereof.

The information can be stored in a storage medium for later analysis as well. For example, trend analysis can be performed to determine what operating parameters are likely to result in the power draw exceeding the predetermined threshold magnitudes. In some examples, the control circuitry can provide an alert that some operating parameters may lead to such a situation.

As shown in the method of FIG. 3A, representing predeterministic system operation, a welding power system receives an input corresponding to one or more supply power levels via an interface (e.g., interface 118) in block 302. In block 304, the control circuitry controls the power conversion circuitry to condition supply power from one or more power supply sources to provide, or to prepare to provide, output power for one or more welding devices.

In block 306, the control circuitry compares the one or more supply power levels to a plurality of predetermined threshold current magnitudes or a plurality of predetermined threshold power magnitudes, wherein the magnitudes correspond to an output power level associated with one or more welding parameters (e.g., a power level output from the power supply to perform a selected welding process, to operate a selected device, etc.) or an input power level associated with the one or more welding parameters (e.g., an input power level needed to perform a selected welding process, to operate a selected device, etc.). For example, the threshold magnitudes can be discrete values or a range of values for the supply current or power, and may be provided in a listing of magnitudes and associated welding parameters, which can be stored in a storage device and/or memory (e.g., in storage device(s) 123 and/or the memory 124).

In block 308, the control circuitry determines a subset of welding parameters of the one or more welding parameters capable of achieving an output power level at or below the one or more supply power levels based on the comparison. For example, a level of some welding parameters (e.g., current, voltage, power, wire feed speed, etc.), may be identified, above which a draw on the supply power may exceed an applicable threshold. These welding parameters may be presented as the subset of welding parameters, which may also be associated with a subset of other welding features, such as one or more welding processes, welding process-types, welding operations, welding materials, the welding tools and/or devices, etc., which may also be selectively presented.

In block 310, the control circuitry controls the interface to present the subset of welding parameters (or other associated features). For example, the interface can be a graphical user interface configured to display (e.g., display 116) one or more of text or icons corresponding to the subset of welding parameters or one or more welding processes available at the adjusted output power.

In block 312, the control circuitry receives a selection corresponding to a welding parameter of the subset of welding parameters. In block 314, the control circuitry controls the power conversion circuitry to provide and/or adjust the output power to one or more welding devices based on the output power level associated with the selected welding parameter of the subset of welding parameters. For example, the control circuitry can lower (or raise) power output to the welding devices, distribute/prioritize power among connected welding or auxiliary devices, and/or deactivate (or activate) an outlet, receptacle, or studs configured to receive a power cable.

In some additional or alternative examples, the method 300 proceeds to block 316 shown in FIG. 3B, where, based on a selection of a welding parameter of the subset of welding parameter, the control circuitry receives information, such as power component data or wire feed speed, corresponding to the selected welding parameter (e.g., from an input device, storage device/memory, remote or networked device, etc.). In block 318, the control circuitry controls the power conversion circuitry to adjust a power component and/or wire feed speed for the one or more welding devices based on the data and/or wire feed speed.

In some additional or alternative examples, the method 300 proceeds to block 320 shown in FIG. 3B, where the control circuitry receives data corresponding to one or more components of the supply power, the output power provided to the one or more welding devices, or a combination thereof, during a given welding operation. The data is stored in a memory device in block 322. In block 324, the control circuitry compares one or more supply power components received during another welding operation with the one or more stored supply power components. If the power components do not match, the method returns to block 320 to continue to receive data. If the power components do match, the method proceeds to block 326. In block 326, the control circuitry controls the power conversion circuitry to provide output power corresponding to the given welding operation based on a match between the one or more stored supply power components and the received supply power components match.

In some examples, when a welding system experiences a fault resulting in disconnection or uncontrolled shutdown of power (e.g., a tripped breaker, an overload condition, etc.), the welding system may lack information as to the nature of the fault. For example, when high power demand causes a breaker to trip, the system may not monitor conditions of the fault event in a manner to allow for a determination as to the nature of the fault, much less provide information and/or instructions to the user to correct the fault. In other words, discovering the nature of the fault, and how to correct it, is left to the operator to discover.

In additional or alternative examples, the system may be enabled to monitor welding parameters (e.g., power inputs, power outputs, etc.) to determine the possible nature of the fault. For example, elevated current over a given time period followed by a fault may indicate a tripped breaker. Thus, on subsequent power-up of the welding system, the operator may be presented with a list of possible or likely sources of the fault, and provide a series of steps to identify and/or correct the issue, with the goal of preventing such an occurrence in the future. This can include maintaining a historical record of faults and possible, likely, and/or determined causes and/or solutions, which can be applied to ongoing operations and/or shared with other welding systems to improve operations. For instance, a machine learning algorithm may be applied to the information to either prevent a pending fault and/or correct the issue following an uncontrolled shutdown.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine-readable storage media and to exclude propagating signals.

The control circuitry may identify welding conditions of a given weld and automatically find the optimum value of rate of current rise for the welding conditions. An example control circuit implementation may be an Atmel Mega16 microcontroller, a STM32F407 microcontroller, a field programmable logic circuit and/or any other control or logic circuit capable of executing instructions that executes weld control software. The control circuit could also be implemented in analog circuits and/or a combination of digital and analog circuitry. Examples are described herein with reference to an engine-driven stick welder but may be used or modified for use in any type of high frequency switching power source.

Certain embodiments of the invention are found in the following numbered clauses.
Clause 1. A welding power system, comprising:
   an interface to receive an input corresponding to one or more supply power levels;
   an input circuit to monitor supply current or supply power from one or more supply power sources;
   power conversion circuitry to condition the supply current or the supply power to output power for one or more welding devices; and
   control circuitry configured to:
      receive a measurement of the supply current or the supply power from the input circuit;
      determine a magnitude of the supply current or the supply power;
      compare the supply current magnitude or the supply power magnitude to a predetermined threshold current magnitude or a predetermined threshold power magnitude based in part on the one or more supply power levels; and
      control the power conversion circuitry to adjust the output power to the one or more welding devices in response to an output power demand from the one or more welding devices causing the supply current magnitude or the supply power magnitude to exceed the predetermined threshold current or power magnitude.
Clause 2. The welding power system of clause 1, wherein the supply current magnitude or the supply power magnitude are one of a discrete current or power value or a range of current or power values.
Clause 3. The welding power system of clause 1, wherein the control circuitry is further configured to determine the predetermined threshold current magnitude or predetermined threshold power magnitude based at least in part on a rated power level of the supply power.
Clause 4. The welding power system of clause 1, wherein the one or more supply power levels comprise one or more of a supply power magnitude, a supply current magnitude, a range of supply power magnitudes, or a range of supply current magnitudes.
Clause 5. The welding power system of clause 1, wherein one or more supply power levels are one or more of a breaker size, a generator output, or a power source output rating.
Clause 6. The welding power system of clause 1, wherein the control circuitry is further configured to determine the predetermined threshold current or the predetermined threshold power magnitudes as a percentage above or below the one or more supply power levels, or a magnitude above or below the one or more supply power levels.
Clause 7. The welding power system of clause 1, wherein the interface provides an indication of the supply current magnitude or the supply power magnitude at a moment that the supply current magnitude or the supply power magnitude exceeds the predetermined threshold current or power magnitude.
Clause 8. The welding power system of clause 1, wherein the interface is one or more of a user interface or a communications interface circuit.
Clause 9. The welding power system of clause 1, wherein the control circuitry is further configured to control an alert indicating the output power is adjusted in response to exceeding the predetermined threshold current magnitude or the predetermined threshold power magnitude.
Clause 10. A welding power system, comprising:
   an interface to receive an input corresponding to one or more supply power levels;
   power conversion circuitry to condition supply power from one or more power supply sources to provide output power for one or more welding devices; and
   control circuitry configured to:
      compare the one or more supply power levels to a plurality of predetermined threshold current magnitudes or a plurality of predetermined threshold power magnitudes, wherein the magnitudes correspond to an input power level or an output power level associated with one or more welding parameters;
      determine a subset of welding parameters of the one or more welding parameters capable of achieving an output power level at or below the one or more supply power levels;
      control the interface to present the subset of welding parameters; and control the power conversion circuitry to adjust the output power to one or more welding devices based on the output power level associated with the subset of welding parameters.
Clause 11. The welding power system of clause 10, wherein the interface is a graphical user interface configured to display one or more of text or icons corresponding to the subset of welding parameters or one or more welding processes available at the adjusted output power.
Clause 12. The welding power system of clause 10, wherein the interface is a graphical user interface configured to prevent display of one or more of text or icons corresponding to the subset of welding parameters or one or more welding processes that are not available at the adjusted output power.
Clause 13. The welding power system of clause 10, wherein the interface is further to receive a selection of a first welding parameter of the subset of welding parameter, the control circuitry further configured to:
   receive power component data corresponding the selected first welding parameter; and
   control the power conversion circuitry to adjust a power component for the one or more welding devices based on the data.
Clause 14. The welding power system of clause 10, wherein the interface is further to receive a selection of a second welding parameter of the subset of welding parameter, the control circuitry further configured to:
   receive wire feed speed data corresponding the selected second welding parameter; and control a wire feeder of the one or more welding devices to adjust wire feed speed based on the wire feed speed data.
Clause 15. The welding power system of clause 10, further comprising a memory device to store one or more of the plurality of predetermined threshold current magnitudes, the plurality of predetermined threshold power magnitudes, one or more welding processes, or a combination thereof.
Clause 16. The welding power system of clause 15, wherein the control circuitry is further configured to:
   receive data corresponding to one or more components of the supply power, the output power provided to the one or more welding devices, or a combination thereof during a given welding operation; and
   store the one or more components in the memory device.
Clause 17. The welding power system of clause 16, wherein the control circuitry is further configured to:
   receive data corresponding to one or more components of the supply power, the output power provided to the one or more welding devices, or a combination thereof during another welding operation;
   compare the one or more supply power components received during the other welding operation with the one or more stored supply power components; and
   control the power conversion circuitry to provide output power during the other welding operation based on the one or more stored supply power components in response to a match.
Clause 18. The welding power system of clause 13, wherein the one or more welding processes comprises one or more of a welding-type, a welding operation, a welding material, a welding tool, or a combination thereof.
Clause 19. The welding power system of clause 10, wherein the supply power is provided by a power source including one or more of mains power, a generator, or an energy storage device, the system further comprising an input circuit to monitor supply current from one or more supply power sources.
Clause 20. The welding power system of clause 10, wherein the one or more welding parameters comprises one or more of current, voltage, power, wire feed speed, or a combination thereof.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

## Claims

1. A welding power system, comprising:
an interface to receive an input corresponding to one or more supply power levels;
an input circuit to monitor supply current or supply power from one or more supply power sources;
power conversion circuitry to condition the supply current or the supply power to output power for one or more welding devices; and
control circuitry configured to:
receive a measurement of the supply current or the supply power from the input circuit;
determine a magnitude of the supply current or the supply power;
compare the supply current magnitude or the supply power magnitude to a predetermined threshold current magnitude or a predetermined threshold power magnitude based in part on the one or more supply power levels; and
control the power conversion circuitry to adjust the output power to the one or more welding devices in response to an output power demand from the one or more welding devices causing the supply current magnitude or the supply power magnitude to exceed the predetermined threshold current or power magnitude.

2. The welding power system of claim 1, wherein the supply current magnitude or the supply power magnitude are one of a discrete current or power value or a range of current or power values.

3. The welding power system of claim 1, wherein the control circuitry is further configured to determine the predetermined threshold current magnitude or predetermined threshold power magnitude based at least in part on a rated power level of the supply power.

4. The welding power system of claim 1, wherein the one or more supply power levels comprise one or more of a supply power magnitude, a supply current magnitude, a range of supply power magnitudes, or a range of supply current magnitudes, or
wherein one or more supply power levels are one or more of a breaker size, a generator output, or a power source output rating.

5. The welding power system of claim 1, wherein the control circuitry is further configured to determine the predetermined threshold current or the predetermined threshold power magnitudes as a percentage above or below the one or more supply power levels, or a magnitude above or below the one or more supply power levels.

6. The welding power system of claim 1, wherein the interface provides an indication of the supply current magnitude or the supply power magnitude at a moment that the supply current magnitude or the supply power magnitude exceeds the predetermined threshold current or power magnitude or
wherein the interface is one or more of a user interface or a communications interface circuit.

7. The welding power system of claim 1, wherein the control circuitry is further configured to control an alert indicating the output power is adjusted in response to exceeding the predetermined threshold current magnitude or the predetermined threshold power magnitude.

8. A welding power system, comprising:
an interface to receive an input corresponding to one or more supply power levels;
power conversion circuitry to condition supply power from one or more power supply sources to provide output power for one or more welding devices; and
control circuitry configured to:
compare the one or more supply power levels to a plurality of predetermined threshold current magnitudes or a plurality of predetermined threshold power magnitudes, wherein the magnitudes correspond to an input power level or an output power level associated with one or more welding parameters;
determine a subset of welding parameters of the one or more welding parameters capable of achieving an output power level at or below the one or more supply power levels;
control the interface to present the subset of welding parameters; and
control the power conversion circuitry to adjust the output power to one or more welding devices based on the output power level associated with the subset of welding parameters.

9. The welding power system of claim 8, wherein the interface is a graphical user interface configured to display one or more of text or icons corresponding to the subset of welding parameters or one or more welding processes available at the adjusted output power or
wherein the interface is a graphical user interface configured to prevent display of one or more of text or icons corresponding to the subset of welding parameters or one or more welding processes that are not available at the adjusted output power.

10. The welding power system of claim 8, wherein the interface is further to receive a selection of a first welding parameter of the subset of welding parameter, the control circuitry further configured to:
receive power component data corresponding the selected first welding parameter; and
control the power conversion circuitry to adjust a power component for the one or more welding devices based on the data.

11. The welding power system of claim 8, wherein the interface is further to receive a selection of a second welding parameter of the subset of welding parameter, the control circuitry further configured to:
receive wire feed speed data corresponding the selected second welding parameter; and
control a wire feeder of the one or more welding devices to adjust wire feed speed based on the wire feed speed data.

12. The welding power system of claim 8, further comprising a memory device to store one or more of the plurality of predetermined threshold current magnitudes, the plurality of predetermined threshold power magnitudes, one or more welding processes, or a combination thereof and optionally
wherein the control circuitry is further configured to:
receive data corresponding to one or more components of the supply power, the output power provided to the one or more welding devices, or a combination thereof during a given welding operation; and
store the one or more components in the memory device and optionally
wherein the control circuitry is further configured to:
receive data corresponding to one or more components of the supply power, the output power provided to the one or more welding devices, or a combination thereof during another welding operation;
compare the one or more supply power components received during the other welding operation with the one or more stored supply power components; and
control the power conversion circuitry to provide output power during the other welding operation based on the one or more stored supply power components in response to a match.

13. The welding power system of claim 10, wherein the one or more welding processes comprises one or more of a welding-type, a welding operation, a welding material, a welding tool, or a combination thereof.

14. The welding power system of claim 8, wherein the supply power is provided by a power source including one or more of mains power, a generator, or an energy storage device, the system further comprising an input circuit to monitor supply current from one or more supply power sources.

15. The welding power system of claim 8, wherein the one or more welding parameters comprises one or more of current, voltage, power, wire feed speed, or a combination thereof.
